Europäisches Patentamt

European Patent Office

Office européen des brevets

(19)

(11) Numéro de publication: **0 217 832**

**B1**

(12) FASCICULE DE BREVET EUROPEEN

(45) Date de publication du fascicule du brevet: 25.07.90

(21) Numéro de dépôt: 86901763.2

(22) Date de dépôt: 25.03.86

(86) Numéro de dépôt international:
PCT/BE86/00009

(87) Numéro de publication internationale:
WO 86/05671 09.10.86 Gazette 86/22

(51) Int. Cl.⁵: **A 47 J 36/28,** F 24 J 1/00,
C 09 K 5/00

(54) PROCEDE DE CHAUFFAGE D'UN ALIMENT CONTENU DANS UN RECIPIENT DE CONSERVE.

(30) Priorité: 01.04.85 LU 85831

(43) Date de publication de la demande:
15.04.87 Bulletin 87/16

(45) Mention de la délivrance du brevet:
25.07.90 Bulletin 90/30

(84) Etats contractants désignés:
AT BE CH DE FR GB IT LI LU NL SE

(56) Documents cités:
EP-A-0 082 834
BE-A- 677 816
DE-A-2 436 925
FR-A- 856 079

(73) Titulaire: **TARAHELM LIMITED**
**23, Great Castle Street**
**London W1N 8NQ (GB)**

(72) Inventeur: **APELLANIZ, Ramon**
**10, Tienne du Peuthy**
**B-1338 Lasne (BE)**

(74) Mandataire: **Fobe, Edouard et al**
**Bureau VANDER HAEGHEN 63, Avenue de la**
**Toison d'Or**
**B-1060 Bruxelles (BE)**

Courier Press, Leamington Spa, England.

# EP 0 217 832 B1

**Description**

La présente invention est relative à un procédé de chauffage d'un aliment contenu dans un récipient de conserve, tel qu'une boîte ou un ravier, par réaction de chaux vive avec de l'eau dans une enceinte contiguë à celle contenant l'aliment.

Pour le chauffage d'aliments en conserve, il est connu d'utiliser la chaleur provenant de la réaction exothermique entre de la chaux vive et de l'eau. La chaleur émise par cette réaction d'extinction ou d'hydratation de la chaux est transmise à travers la paroi séparant les deux enceintes précitées.

Il est également connu par le document EP—A—0 082 834, d'utiliser, dans le même but, de la chaux vive à basse réactivité dite "chaux surcuite", c'est-à-dire de la chaux vive dont la réactivité vis-à-vis de l'eau a été réduite par cuisson à une température supérieure à environ 1150°C. L'emploi de cette chaux vive surcuite est indispensable. Elle permet, par une réaction modérée, d'obtenir une bonne transmission de chaleur étalée dans le temps, d'éviter des projections de lait de chaux, ainsi qu'une perte de chaleur sous forme d'émission de vapeur d'eau. La quanatité d'eau utilisée pour la réaction est comprise entre 0,75 à 3 parties en poids par partie en poids de chaux vive.

On a constaté que la chaux surcuite est très sensible l'eau et qu'elle subit une diminution de sa réactivité dans le temps, probablement par absorption d'une petite quantité d'eau, malgré les mesures que l'on prend pour isoler les deux réactifs (chaux vive et eau) jusqu'au moment où l'on désire les faire réagir l'un avec l'autre.

Ainsi, même si l'eau est contenue dans un récipient en matière plastique imperméable et si une couche de cire microcristalline d'imperméabilisation est coulée à la surface de la masse de chaux, on observe une réduction de la réactivité de la chaux surcuite, qui se traduit par une durée de réaction trop longue. Il s'ensuit que la température maximale atteinte par l'aliment diminue dans le temps au prorata de l'altération de la chaux par l'eau et que le temps pour atteindre une température adéquate pour consommer l'aliment est excessif. Ce phénomène est particulièrement évident lorsque la température initiale de l'aliment est basse (0 à 10°C).

On a constaté à présent qu'il est possible, de manière étonnamment simple, sans utiliser d'autres réactifs que de l'eau et de la chaux vive, de pallier les inconvénients précités et d'améliorer considérablement la transmission de chaleur du milieu réactionnel à l'aliment, tout en évitant des projections de lait de chaux et/ou des pertes de chaleur par émission de vapeur d'eau.

Conformément à la présente invention, on utilise, en plus d'une chaux vive surcuite, c'est-à-dire d'une chaux vive dont la réactivité a été réduite par cuisson à une température supérieure à environ 1150°C, une une quantité de chaux vive à haute ou moyenne réactivité jusque 75% en poids, de préférence de 6 à 75% en poids par rapport en poids total de chaux en présence, la chaux vive à haute ou moyenne réactivité étant une chaux vive cuite à une température comprise entre 900 et 1150°C. La chaux vive surcuite et la chaux vive à haute et moyenne réactivité présentant des réactivités différentes par rapport a l'eau.

La proportion de chaux vive à réactivité élevée ou moyenne est, de préférence, de 12 à 50% en poids par rapport à la masse globale de chaux.

Lorsque'on utilise moins de 6% environ en poids de chaux à réactivité élevée ou moyenne par rapport au poids total de chaux vive, on ne constate pas d'influence perceptible de l'addition de cette chaux à haute ou moyenne réactivité. Par contre, lorsqu'on fait usage de plus de 75% environ de chaux vive à réactivité élevée ou moyenne, la réaction est trop rapide et on constate des pertes de chaleur sous forme de jets de vapeur d'eau et/ou de projections de lait de chaux.

Pour une boîte de conserve standard contenant 420 grammes d'aliment, on utilise de préférence, conformément à la présente invention, 17 à 100 grammes de chaux vive à haute ou moyenne réactivité pour une masse globale de chaux vive (chaux vive surcuite + chaux vive à haute ou moyenne réactivité) de 140 à 200 grammes.

On entend par "chaux vive à haute ou moyenne réactivité", une chaux vive cuite doucement, c'est-à-dire une chaux cuite à une température comprise entre 900 et 1150°C. Ce type de chaux correspond à une qualité qui est couramment fabriquée et utilisée. Il s'agit d'une chaux très poreuse qui réagit rapidement au contact de l'eau.

Dans le procédé suivant la présente invention, les deux types de chaux sont, de préférence, utilisés sous forme de grains d'environ 2 à 5 mm. Les grains de chaux d'un type peuvent être mélangés à des grains de l'autre type. On peut également utiliser deux couches superposées contenant chacune un seul type de chaux vive. Ainsi, on peut utiliser une couche de grains de chaux vive à haute ou moyenne réactivité surmontée d'une couche de grains de chaux surcuite ou vice-versa.

Par l'ajout de chaux à haute ou moyenne réactivité, on a constaté d'une façon surprenante que la quantité d'eau mise en réaction avec le mélange de chaux vive surcuite et de chaux vive à réactivité élevée ou moyenne pouvait être réduite, de 0,75 partie en poids d'eau par partie en poids de chaux vive jusqu'à 0,4 partie en poids d'eau par partie en poids de chaux, ce qui présente l'avantage de diminuer le poids et le volume des matériaux chauffants (réactifs) utilisés.

Lorsqu'on utilise, conformément à la présente invention, un mélange de chaux vive surcuite et de chaux vive à haute ou moyenne réactivité, on constate que, dès la mise en contact d'eau avec ce mélange, la fraction de chaux à haute ou moyenne réactivité s'hydrate et dégage presque immédiatement une quantité de chaleur suffisante pour amener le mélange réactionnel à une température supérieure à 80°C. A

2

# EP 0 217 832 B1

cette température, non seulement la transmission de chaleur à l'aliment commence à s'effectuer, mais la chaux surcuite se met progressivement en réaction, même si cette chaux vive surcuite a subi, dans le temps, une altération de sa réactivité par absorption de minimes quantités d'eau. La chaleur produite par l'hydratation de la chaux vive à haute ou moyenne réactivité amorce la réaction d'hydratation de la chaux surcuite.

Par ailleurs, grâce à l'addition de chaux vive à haute ou moyenne réactivité à la chaux surcuite, le pouvoir chauffant initial de la chaux se manifeste pendant une durée dépassant un an, ainsi que des essais de longue durée ont permis de le constater.

Outre la réduction du temps nécessaire au transfert de chaleur à l'aliment, on a constaté que l'incorporation de chaux à haute ou moyenne réactivité permet d'obtenir un meilleur échauffement de l'aliment (une température finale plus élevée) et que le risque de projection de lait de chaux et d'émission de vapeur d'eau est sensiblement réduit.

Un autre avantage du procédé suivant l'invention est que l'incorporation de chaux à haute ou moyenne réactivité permet d'ajuster facilement la réactivité de la masse globale de chaux à la valeur optimale.

Bien qu'il soit difficile de comprendre les effets bénéfiques joués par la chaux à haute ou moyenne réactivité, on peut supposer que celle-ci protège la chaux surcuite de toute altération par l'eau, par le fait que l'eau est absorbée de préférence par la chaux à haute ou moyenne réactivité qui présente une plus grande affinité vis-à-vis de l'eau.

Le procédé suivant l'invention est illustré par les essais non limitatifs suivants:

Première série d'essais

Ces essais démontrent la perte de réactivité subie dans le temps par de la chaux surcuite.

Quatre boîtes de conserve à ouverture facile contenant 425 g de potage épais (à chauffer) ont été placées concentriquement à l'intérieur d'une boîte métallique dont la paroi extérieure a été calorifugée. La chambre annulaire entre les deux boîtes avait un volume de 450 cm$^3$. A l'intérieur de cette chambre annulaire, on a placé 170 g de chaux vive en grains dont la granulométrie était comprise entre 2 et 5 mm. Cette chaux a été préalablement surcuite à une température de 1200°C pendant 4 heures. Ce régime de cuisson lui confère une réactivité réduite permettant un dégagement progressif de la chaleur d'hydratation pendant 10 minutes.

Dans la chambre annulaire au-dessus de la masse de chaux surcuite, une couche de 20 g de cire microcristalline a été coulée à une température de 60°C. Elle s'est solidifiée au contact de la masse de chaux et des parois metalliques.

On a placé ensuite 170 g d'eau enfermée dans un sac en matière plastique souple dans la chambre annulaire. Celle-ci a été ensuite hermétiquement close par un anneau métallique qui a été serti entre les deux boîtes.

Les quatre boîtes ont été testées 1, 4 et 8 mois après leur fabrication.

Pour tous les essais, la température initiale du potage était de 17°C. L'anneau métallique, le sac contenant l'eau et la couche de cire ont été percés au moyen d'une aiguille en deux points.

Resultats

*Après 1 mois*

Après une minute, la réaction d'extinction a débuté. Dix minutes après le percement, la température de l'aliment était de 63°C. Après 12 minutes, on a atteint une température maximale de 65,5°C, soit un ΔT de 48,5°C.

*Après 4 mois*

La réaction a débuté après 2 minutes. Après 10 minutes, la température était de 58°C. Après 12 minutes, la température finale était de 63,5°C, soit un ΔT de 46,5°C.

*Après 8 mois*

La réaction a débuté après 3,5 minutes. Après 10 minutes, la température était de 54°C. Après 12 minutes, la température maximale était de 60°C, soit un ΔT de 43°C.

On voit que la réactivité de la chaux surcuite a nettement diminué, ce qui se traduit par un regardement de plus en plus grand de l'amorçage de la réaction et par une diminution de plus en plus forte du ΔT.

Deuxième série d'essais

Une deuxième série d'essais a été réalisée dans des conditions identiques à celles de la première série d'essais, si ce n'est qu'au lieu d'utiliser 170 g de chaux vive surcuite, on a utilisé 140 g de la même chaux surcuite, à laquellle on a ajouté 30 g de chaux à réactivité élevée, c'est-à-dire de la chaux qui avait été calcinée à 1050°C pendant 4 heures.

La masse globale de chaux était identique à la première série (170 g). Quatre boîtes de potage ont été testées après les mêmes périodes.

*Après 1 mois*

La réaction d'extinction a débuté après 30 sec. Dix minutes après le percement, la température de

3

# EP 0 217 832 B1

l'aliment était de 65°C. Après 12 minutes, on a atteint une température maximale de 68°C, soit un ΔT de 51°C.

*Après 4 mois*

La réaction d'extinction a débuté après 40 sec. Après 10 minutes, la température était de 64°C. Après 12 minutes, on a atteint une température maximale de 67,5°C, soit un ΔT de 50,5°C.

*Après 8 mois*

La réaction d'extinction a débuté après 1 minute. Après 10 minutes, la température était de 62,5°C. Après 12 minutes, on a atteint une température maximale de 66,5°C, soit un ΔT de 49,5°C.

Le tableau I suivant rend compte des résultats des première et deuxième séries d'essais.

## TABLEAU I

| Quantité de chaux surcuite (g) | 170 | 140 |
|---|---|---|
| Quantité de chaux à réactivité élevée (g) | 0 | 30 |
| *Après 1 mois* | | |
| Début de réaction après (secondes) | 60 | 30 |
| Température (°C) après 10 minutes | 63 | 65 |
| Température (°C) après 12 minutes | 65,5 | 68 |
| ΔT (maximum) | 48,5 | 51 |
| *Après 4 mois* | | |
| Début de réaction après (secondes) | 120 | 40 |
| Température (°C) après 10 minutes | 58 | 64 |
| Température (°C) après 12 minutes | 63,5 | 67,5 |
| ΔT (maximum) | 46,5 | 50,5 |
| *Après 8 mois* | | |
| Début de réaction après (secondes) | 210 | 60 |
| Température (°C) après 10 minutes | 54 | 62,5 |
| Température (°C) après 12 minutes | 60 | 66,5 |
| ΔT (maximum) | 43,0 | 49,5 |

Troisième série d'essais

Une troisième série d'essais a été réalisée dans des conditions identiques à celles de la première série d'essais, si ce n'est qu'au lieu d'utiliser 170 g d'eau, on a utilisé des quantités d'eau inférieures à 0,75 partie en poids d'eau pour 1 partie de chaux.

La masse globale de chaux était identique à celle des première et deuxième séries d'essais (170 g).

Trois boîtes de potage ont été testées après 1 mois avec des quantités d'eau de 127 g (0,75 partie en poids d'eau par partie en poids de chaux), 100 g (0,58 partie en poids d'eau par partie en poids de chaux), 68 g (0,40 partie en poids d'eau par partie en poids de chaux).

*127 g d'eau*

La réaction d'extinction a débuté après 40 sec. Dix minutes après le percement, la température de l'aliment était de 61°C. Après 12 minutes, on a atteint une température maximale de 62,5°C, soit un ΔT de 45,5°C.

4

*100 g d'eau*

La réaction d'extinction a débuté après 35 sec. Après 10 minutes, la température était de 58°C. Après 12 minutes, on a atteint une température maximale de 60,5°C, soit un ΔT de 43,5°C.

*68 g d'eau*

La réaction d'extinction a débuté après 35 sec. Après 10 minutes, la température était de 55,5°C. Après 12 minutes, on a atteint une température maximale de 58°C, soit un ΔT de 41,5°C.

Quatrième série d'essais

Une quatrième série d'essais a été réalisée dans des conditions identiques à celles de la deuxième série d'essais, si ce n'est qu'au lieu d'utiliser 170 g d'eau, on a utilisé des quantités d'eau inférieures à 0,75 parties en poids d'eau pour 1 partie de chaux.

La masse globale du mélange des chaux était la même que dans les trois premières séries d'essais (170 g).

Trois boîtes de potage ont été testés après 1 mois avec des quantités d'eau de 127 g (0,75 partie en poids d'eau pour 1 partie en poids de chaux), 100 g (0,58 partie en poids d'eau pour 1 partie en poids de chaux), 68 g (0,40 partie en poids d'eau pour 1 partie en poids de chaux).

*127 g d'eau*

La réaction d'extinction a débuté après 30 sec. Dix minutes après le percement, la température de l'aliment était de 66°C. Après 12 minutes, on a atteint une température maximale de 69°C, soit un ΔT de 52°C.

*100 g d'eau*

La réaction d'extinction a débuté après 25 sec. Après 10 minutes, la température était de 66,5°C. Après 12 minutes, on a atteint une température maximale de 70°C, soit un ΔT de 53°C.

*68 g d'eau*

La réaction d'extinction a débuté après 25 sec. Après 10 minutes, la température était de 64°C. Après 12 minutes, on a atteint une température maximale de 64,5°C, soit un ΔT de 47,5°C.

Le tableau II rend compte des résultats des troisième et quatrième séries d'essais

TABLEAU II

| Quantité de chaux surcuite (g) | 170 | | | | 140 | | | |
|---|---|---|---|---|---|---|---|---|
| Quantité de chaux à réactivité élevée (g) | 0 | | | | 30 | | | |
| Quantité d'eau (g) | 170 | 127 | 100 | 68 | 170 | 127 | 100 | 68 |
| Parties en poids eau/chaux | 1 | 0,75 | 0,58 | 0,4 | 1 | 0,75 | 0,58 | 0,4 |
| Début de réaction après (secondes) | 60 | 40 | 35 | 35 | 30 | 30 | 25 | 25 |
| Température (°C) après 10 minutes | 63 | 61 | 58 | 55,5 | 65 | 66 | 66,5 | 64 |
| Température (°C) après 12 minutes | 65,5 | 62,5 | 60,5 | 58,0 | 68 | 69 | 70 | 64,5 |
| ΔT (maximum) | 48,5 | 45,5 | 43,5 | 41,5 | 51 | 52 | 53 | 47,5 |

Des essais complémentaires ont permis de constater que les effets favorables de la présence de chaux à haute ou moyenne réactivité conjointement avec de la chaux surcuite se manifestent pour autant que la teneur en chaux fortement ou moyennement réactive (soft burnt lime) ne dépasse pas environ 75% en poids de la masse pondérale totale de chaux vive en présence et qu'il est possible de réduire la quantité d'eau jusqu'à 0,40 partie en poids d'eau pour 1 partie en poids de chaux, ce qui permet d'utiliser une quantité d'eau légèrement supérieure à la quantité d'eau stoechiométrique nécessaire à la réaction.

Ces essais ont également démontré que la température de l'aliment chauffé reste suffisamment élevée pendant la consommation de ce dernier, en particulier lorsque l'enveloppe extérieure de la boîte de conserve est protégée contre les déperditions de chaleur par une couche thermique isolante.

Dans le présente mémoire, le terme "aliment" désigne les aliments les plus divers, ainsi que les boissons que l'on consomme à l'état chaud. Ces aliments peuvent présenter une consistance liquide, pâteuse, voire même solide. Ces aliments peuvent être des potages, des boissons, des légumes cuits ou des pâtes cuites éventuellement mélangés à des morceaux de viande, etc ...

Il est évident que l'invention n'est pas limitée aux détails décrits plus haut et que des modifications peuvent être apportées à ces détails sans sortir du cadre de l'invention, telle que définie dans les revendications.

## Revendications

1. Procédé de chauffage d'un aliment contenu dans un récipient de conserve par réaction de chaux vive avec de l'eau dans une enceinte contiguë à celle contenant l'aliment, caractérisé en ce qu'on utilise, en plus d'une chaux vive surcuite, c'est-à-dire une chaux vive dont la réactivité a été réduite par cuisson à une température supérieure à environ 1150°C, une quantité de chaux vive à haute ou moyenne réactivité jusque 75% en poids par rapport au poids total de chaux en présence, la chaux vive à haute ou moyenne réactivité étant une chaux vive cuite à une température comprise entre 900 et 1150°C, la chaux vive surcuite et la chaux vive à haute ou moyenne réactivité mises en présence présentant des réactivités différentes par rapport a l'eau.

2. Procédé suivant la revendication 1, caractérisé en ce qu'on utilise 6 à 75% de chaux vive à haute ou moyenne réactivité par rapport au poids total de chaux vive surcuite et de chaux vive à haute ou moyenne réactivité.

3. Procédé suivant la revendication 2, caractérisé en ce qu'on utilise 12 à 50% de chaux vive à haute ou moyenne réactivité par rapport au poids total de chaux vive surcuite et de chaux vive à haute ou moyenne réactivité.

4. Procédé suivant l'une quelconque des revendications précédentes, caractérisé en ce qu'on utilise 0,4 à 3 parties en poids d'eau par partie en poids de chaux vive.

5. Procédé suivant l'une quelconque des revendications précédentes, caractérisé en ce qu'on utilise pour une conserve d'aliment de 420 grammes, 17 à 100 grammes de chaux vive à haute ou moyenne réactivité par 140 à 200 grammes environ de chaux vive totale, c'est-à-dire de chaux vive surcuite et de chaux vive à haute ou moyenne réactivité.

6. Procédé suivant l'une quelconque des revendications précédentes, caractérisé en ce qu'on utilise un mélange de chaux vive surcuite et de chaux vive à réactivité élevée ou moyenne en grains de 2 à 5 millimètres.

## Patentansprüche

1. Verfahren zum Wärmen eines in einem Konservenbehälter befindlichen Nahrungsmittels durch Reaktion von Ätzkalk mit Wasser in einem an den das Nahrungsmittel enthaltenen anschließenden Behälter, dadurch gekennzeichnet, daß neben totgebranntem Kalk, d.h. Ätzkalk, dessen Reaktivität durch Brennen bei einer Temperatur von mehr als etwa 1150°C reduziert wurde, eine Menge an Ätzkalk mit hoher oder mittlerer Reaktivität von bis zu 75 Gew.%, bezogen auf das Gesamtgewicht des vorhandenen Kalks, verwendet wird, wobei der Ätzkalk mit hoher oder mittlerer Reaktivität ein Ätzkalk ist, der bei einer Temperatur zwischen 900 und 1500°C gebrannt wurde, und wobei der totgebrannte Ätzkalk und der Ätzkalk mit hoher oder mittlerer Reaktivität, welche zum Einsatz gelangen, unterschiedliche Reaktivitäten gegenüber Wasser aufweisen.

2. Verfahren nach Anspruch 1, dadurch gekennzeichnet, daß 6 bis 75% Ätzkalk mit hoher oder mittlerer Reaktivität, bezogen auf das Gesamtgewicht an totgebranntem Kalk und Ätzkalk mit hoher oder mittlerer Reaktivität, verwendet werden.

3. Verfahren nach Anspruch 2, dadurch gekennzeichnet, daß 12 bis 50% Ätzkalk mit hoher oder mittlerer Reaktivität, bezogen auf das Gesamtgewicht an totgebranntem Ätzkalk und Ätzkalk mit hoher oder mittlerer Reaktivität, verwendet werden.

4. Verfahren nach einem der vorhergehenden Ansprüche, dadurch gekennzeichnet, daß 0,4 bis 3 Gewichtsteile Wasser pro Gewichtsteil Ätzkalk verwendet werden.

5. Verfahren nach einem der vorhergehenden Ansprüche, dadurch gekennzeichnet, daß bei einer Nahrungsmittelkonserve von 420 Gramm 17 bis 100 Gramm Ätzkalk mit hoher oder mittlerer Reaktivität pro etwa 140 bis 200 Gramm Gesamtätzkalk, d.h. totgebranntem Ätzkalk und Ätzkalk mit hoher oder mittlerer Reaktivität, verwendet werden.

6. Verfahren nach einem der vorhergehenden Ansprüche, dadurch gekennzeichnet, daß eine Mischung aus totgebranntem Kalk und Ätzkalk mit erhöhter oder mittlerer Reaktivität in Körnchen von 2 is 5 mm verwendet wird.

**Claims**

1. A process for heating a food contained in a preserve can by reaction of quicklime with water in an enclosure adjacent to that containing the food, characterized in that, besides overburnt quicklime, i.e. a quicklime the reactivity of which has been reduced by burning at a temperature greater than about 1150°C, an amount of quicklime having a high or medium reactivity up to 75% by weight with respect to the total weight of quicklime in presence is used, the quicklime having a high or medium reactivity being a quicklime burnt at a temperature comprised between 900 and 1150°C, the overburnt quicklime and the quicklime having a high or medium reactivity used together having different reactivities with water.

2. Process according to claim 1, characterized in that 6 to 75% of quicklime having a high or medium reactivity with respect to the total weight of overburnt quicklime and of quicklime having a high or medium reactivity is used.

3. Process according to claim 2, characterized in that 12 to 50% of quicklime having a high or medium reactivity with respect to the total weight of overburnt quicklime and of quicklime having a high or medium reactivity is used.

4. Process according to anyone of the preceding claims, characterized in that 0.4 to 3 parts by weight of water per part of quicklime are used.

5. Process according to anyone of the preceding claims, characterized in that, for a food preserve can of 420 grams, 17 to 100 grams of quicklime having a high or medium reactivity per about 140 to 200 grams of total quicklime, i.e. overburnt quicklime and quicklime having a high or medium reactivity, are used.

6. Process according to anyone of the preceding claims, characterized in that a mixture of grains of a size of 2 to 5 millimeters of overburnt quicklime and of quicklime having a high or medium reactivity is used.